Europäisches Patentamt

European Patent Office

Office européen des brevets

(19)

(11) Numéro de publication: **0 150 629**
**B1**

(12) **FASCICULE DE BREVET EUROPEEN**

(45) Date de publication du fascicule du brevet: **06.04.88**

(51) Int. Cl.⁴: **A 01 F 15/00**

(21) Numéro de dépôt: **84400187.5**

(22) Date de dépôt: **27.01.84**

(54) **Presse à balles cylindriques avec dispositif limiteur de couple.**

(43) Date de publication de la demande:
**07.08.85 Bulletin 85/32**

(45) Mention de la délivrance du brevet:
**06.04.88 Bulletin 88/14**

(84) Etats contractants désignés:
**DE FR GB IT NL**

(56) Documents cités:
**EP-A-0 076 502**
**EP-A-0 102 530**
**FR-A-2 384 440**

(73) Titulaire: **JOHN DEERE (Société Anonyme)**
**20, Rue André Dessaux**
**F-45401 Fleury-les-Aubrais (FR)**

(72) Inventeur: **Anstey, Henry Dennis**
**RR4 Box 188a**
**Ottumwa Iowa 52501 (US)**
Inventeur: **Viaud, Jean**
**16, Rue de l'Ecole**
**F-57200 Sarreguemines (FR)**

(74) Mandataire: **Pruvost, Marc Henri et al**
**Cabinet ORES 6, Avenue de Messine**
**F-75008 Paris (FR)**

Courier Press, Leamington Spa, England.

## Description

La présente invention se rapporte d'une façon générale aux presses à balles cylindriques ou rondes.

Ces presses sont d'un type général bien connu (voir p.e. EP—A—76502) et comprennent des jeux de bandes, courroies ou analogues, qui, par leur déplacement, formant par enroulement à l'intérieur d'une chambre ménagée dans le corps de la presse une balle de forme générale cylindrique ou ronde à partir de produits de récolte, notamment de fourrage ou de foin, ramassés sur le champ au cours de la progression de la presse. Quand la balle a atteint le diamètre désiré et a été liée, la porte arrière de la presse est ouverte et la balle est déchargée sur le sol. La formation d'une autre balle par enroulement peut ensuite être déclenchée à l'intérieur de la presse.

Bien que, dans l'ensemble de la description, le terme "courroies" soit employé pour plus de simplicité pour désigner les éléments assurant par enroulement la formation de la balle dans la chambre de la presse, on comprendra que l'invention concerne également les machines dans lesquelles d'autres éléments, tels que des chaînes par exemple, sont utilisés à cet effet.

Pour assurer la formation de balles présentant une densité satisfaisante, c'est-à-dire dans lesquelles les produits de récolte enroulés sont suffisamment serrés pour fournir la cohésion requise, évitant toute désagrégation ou tout effritement de la balle de fourrage ou autre lors de son déchargement sur le sol à partir de la presse et de sa manutention ultérieure, il est usuel de soumettre certains des rouleaux de renvoi des courroies de la presse à l'effet d'une sollicitation, qui a pour but de créer dans les courroies une tension provoquant elle-même le serrage des produits de récolte au cours de leur enroulement. Les moyens exerçant cette sollicitation sur les rouleaux de renvoi mobiles de la presse résistent ainsi à l'augmentation de volume de la chambre de formation de la balle et compriment les produits de récolte en cours d'enroulement par la tension exercée dans les courroies.

La densité des balles formées dans une presse est généralement réglable par ces moyens de sollicitation des rouleaux de renvoi.

Il est connu d'utiliser, pour constituer lesdits moyens de sollicitation des rouleaux de renvoi, des cylindres hydrauliques ou des ressorts.

Au cours du travail de la presse, il peut arriver, notamment dans des conditions correspondant à une densité de balle réglée sensiblement au maximum, que compte tenu des conditions de travail, par exemple d'une forte humidité des produits de récolte ou de la présence de "mottes" ou "paquets" de produits de récolte formés par agglomération des produits dans l'andain, le couple devant être fourni par l'arbre d'entraînement de la presse, relié à l'arbre de prise de force du tracteur, subisse un accroissement brutal. Cet accroissement brutal du couple résistant doit alors être compensé par un patinage ou glissement dans l'accouplement principal de la presse. Pour des raisons évidentes, il semble préférable d'éviter une telle sollicitation répétée de cet accouplement principal de la presse, dont résulte une fatigue nuisible à la durée service.

Le but de l'invention est de remédier à cet inconvénient et de créer une presse à balles cylindriques ou rondes comportant des moyens comprenant cet accroissement brutal du couple résistant sur l'arbre d'entraînement de la presse, résultant d'une accumulation de produits de récolte ou de conditions de travail défavorables.

L'invention concerne en conséquence une presse à balles cylindriques ou rondes comprenant des jeux de bandes, courroies ou analogues ménageant une chambre de formation d'une balle par enroulement passant sur des rouleaux de renvoi dont l'un au moins est entraîné à partir d'un arbre d'entraînement principal, certains de ces rouleaux de renvoi étant des rouleaux mobiles de tension soumis à l'action de moyens de sollicitation pour le maintien en tension des courroies, caractérisée en ce qu'un détecteur de couple résistant est prévu sur l'arbre d'entraînement principal de la presse et en ce que des moyens reliés à ce détecteur de couple résistant agissent sur ces moyens de sollicitation des rouleaux de mise en tension pour commander lesdits moyens de sollicitation dans un sens réduisant la tension des courroies lors d'un accroissement du couple résistant sur l'arbre d'entraînement de la presse au delà d'une valeur limite prédéterminée.

Suivant un mode de réalisation paraissant avantageux, dans le cas où les rouleaux mobiles de renvoi des courroies assurant leur mise en tension sont soumis à l'action de cylindres hydrauliques, le détecteur de couple est relié directement ou indirectement à ces cylindres hydrauliques pour réduire la pression assurant la mise en tension des courroies lorsque le couple résistant atteint la valeur limite prédéterminée.

Il est dans ce cas généralement prévu, en combinaison avec les cylindres hydrauliques, une valve de détente formant limiteur de pression. Suivant un mode de réalisation de l'invention, le détecteur de couple résistant prévu sur l'arbre d'entraînement principal de la presse est relié à cette valve de détente de manière à réduire son seuil de réponse ou à l'annuler lors de la détection d'un couple résistant sur l'arbre d'entraînement principal dépassant la valeur limite prédéterminée. Etant donné que, dans un circuit hydraulique d'alimentation de cylindres hydrauliques agissant sur les rouleaux mobiles de renvoi des courroies, généralement par l'intermédiaire de bras ou leviers, la valve de détente formant limiteur de pression est montée en dérivation avec un ou plusieurs cylindres hydrauliques de tension, la réduction ou la mise à zéro de son seuil de réponse réduit alors en même temps la pression de travail du ou des cylindres hydrauliques associés dans le même circuit et ainsi la tension des courroies passant sur les rouleaux de renvoi.

Cette réduction de tension permet l'enroulement des produits de récolte en balle d'une manière tenant compte des conditions particulières ainsi rencontrées lors du travail. Dès que le couple résistant sur l'arbre d'entraînement principal tombe à nouveau au-dessous de la valeur limite prédéterminée, le détecteur de couple résistant cesse d'agir sur la valve de détente et la pression de travail du ou des cylindres hydrauliques revient à sa valeur normale.

Suivant une variante de réalisation, le détecteur de couple résistant est relié à une valve de dérivation montée en parallèle avec le ou les cylindres hydrauliques et avec la valve de détente dans le circuit hydraulique concerné, et cette valve de dérivation est actionnée lors de la détection d'un couple résistant excessif sur l'arbre d'entraînement principal de la presse pour renvoyer au réservoir le liquide refoulé par la pompe, afin de faire chuter la pression dans le ou les cylindres hydrauliques et de réduire ainsi la tension des courroies. Ici encore, dès que le couple résistant détecté est retombé au-dessous de la valeur limite prédéterminée, la valve de dérivation revient à sa position initiale de fermeture et la pression dans le ou les cylindres hydrauliques est alors réglée simplement par la valve de détente.

Suivant une autre variante encore, si les organes de sollicitation sont constitués par des ressorts, les moyens reliés à ce détecteur de couple comprennent des moyens mécaniques déplaçant l'un au moins des points de fixation des ressorts pour réduire ou annuler l'effort exercé sur les rouleaux de mise en tension des courroies et réduire ainsi la tension dans ces dernières lors de la détection d'un couple résistant dépassant la valeur limite prédéterminée.

La description qui va suivre, faite en regard des dessins annexés, donnés à titre non limitatif, permettra de mieux comprendre l'invention.

La Fig. 1 est une vue en perspective d'une presse à balles cylindriques ou rondes équipée suivant l'invention.

Les Fig. 2 et 3 sont des représentations schématiques de circuits hydrauliques correspondant à deux modes de réalisation de l'invention.

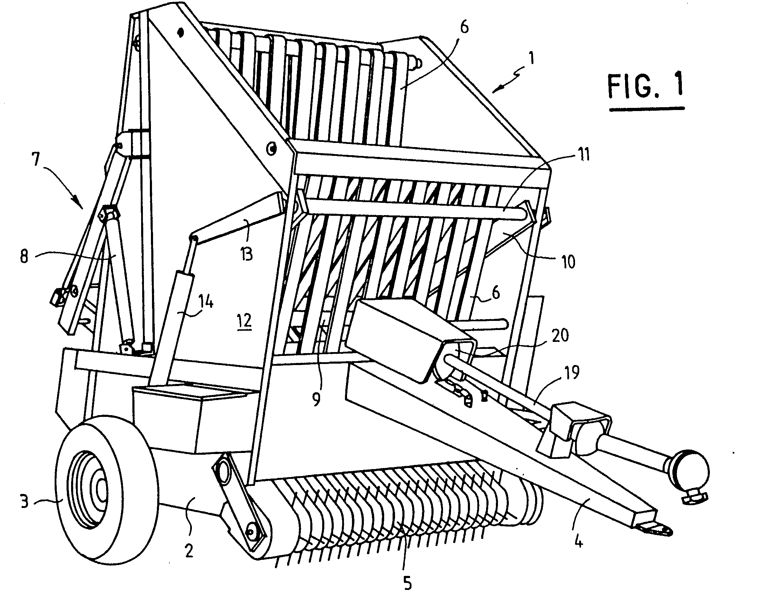

On a représenté sur la Fig. 1 une presse à balles cylindriques ou rondes désignée dans son ensemble par la référence 1, qui comporte un châssis avant 2 supporté par des roues 3 et pouvant être relié par un timon ou une flèche d'attelage 4 à un tracteur agricole. Cette presse comporte à sa partie avant un ramasseur 5 qui alimente en produits de récolte ramassés sur le sol une chambre de presse dans laquelle ces produits de récolte subissent un enroulement entre des bandes, courroies ou analogues 6. Une porte arrière désignée dans son ensemble par la référence 7 est prévue de façon classique à la partie arrière de la presse, en combinaison avec des vérins de relevage 8 qui commandent le relevage de cette porte 7 en vue du déchargement de la balle après son liage.

D'une manière en soi classique sur les presses de ce type, certains des rouleaux de renvoi sur lesquels passent les courroies 6 sont mobiles et sont soumis à une sollicitation, afin de maintenir ces courroies 6 en tension, en vue de l'obtention d'une balle suffisamment dense pour conserver sa cohésion, tout en rendant possible l'accroissement du volume intérieur de la chambre de la presse au fur et à mesure de l'augmentation de diamètre de la balle au cours de sa formation.

Sur la Fig. 1, on a indiqué en 9 un rouleau de renvoi mobile de ce type. Ce rouleau est porté par des bras latéraux 10, qui sont eux-mêmes calés sur un arbre transversal 11 traversant les deux parois latérales 12 de la presse. A l'extérieur de ces parois latérales 12, cet arbre 11 porte des bras 13 dont l'extrémité libre est attaquée par un cylindre hydraulique de grande longueur 14.

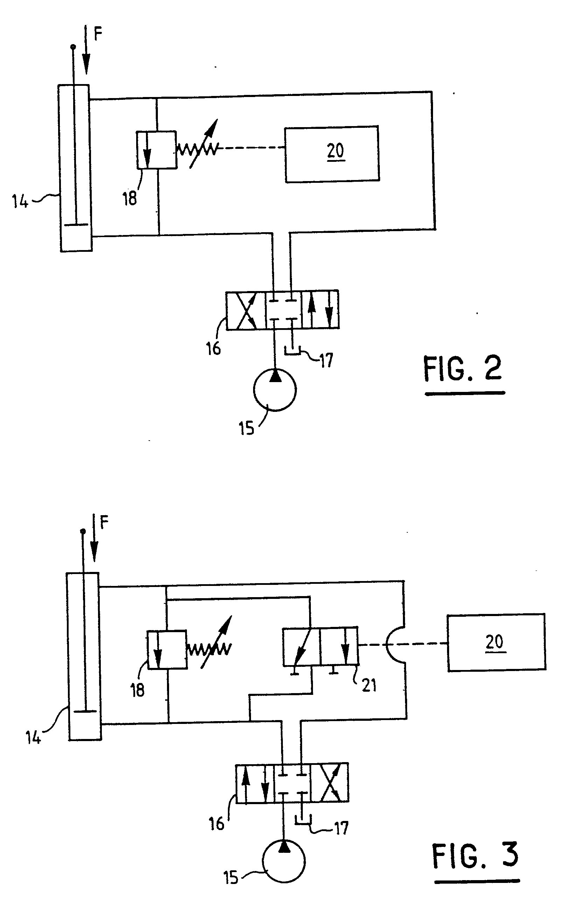

Chaque cylindre hydraulique est alimenté en liquide à partir d'une pompe indiquée schématiquement en 15 sur les Fig. 2 et 3, avec interposition d'une valve de commande ou distributeur 16 commandé à la main par le conducteur du tracteur. Ce distributeur 16 peut occuper de façon connue trois positions différentes, d'alimentation des cylindres hydrauliques 14 dans l'un ou l'autre sens, ou d'obturation et d'isolement de ces cylindres hydrauliques. Le retour du liquide s'effectue en direction du réservoir 17. On a indiqué par une flèche F sur les Fig. 2 et 3 le sens d'action de la pression dans les cylindres hydrauliques 14 pour la mise en tension des courroies. Une valve de détente 18 est prévue dans le circuit hydraulique en dérivation avec le ou les cylindres hydrauliques 14 et sa pression de réponse est réglée en fonction de la tension désirée dans les courroies, qui elle-même dépend des conditions de travail rencontrées. Tous ces éléments sont connus sur les presses de ce type.

Sur la Fig. 1, on a également indiqué en 19 l'arbre d'entraînement principal de la presse, qui est raccordé à l'arbre de prise de force du tracteur agricole auquel la presse est attelée et qui entraîne le ou les rouleux fixes d'entraînement des courroies.

Suivant l'invention il est prévu sur l'arbre d'entraînement principal 19 de la presse un détecteur de couple, qui est indiqué schématiquement en 20 sur la Fig. 1. Ce détecteur est destiné à détecter le couple résistant pour l'entraînement de la presse et il est réglé à une valeur limite prédéterminée, fournissant une réponse pour un couple résistant de préférence un peu inférieur au couple provoquant le patinage ou glissement de l'accouplement principal de la presse. Les détecteurs de couple à réponse électrique utilisables pour cette application sont bien connus dans l'industrie et les techniciens spécialisés pourront sans difficulté aucune choisir un détecteur de couple approprié pour l'application particulière envisagée.

On se reportera maintenant à la Fig. 2, qui montre un mode de réalisation possible de l'invention. Suivant ce mode de réalisation, le détecteur de couple, indiqué schématiquement en 20, est relié comme montré à la valve de détente 18 de manière à fournir à cette valve de détente, lors de sa réponse un signal réduisant ou annulant la pression de réponse de ladite valve de détente.

Ainsi, quand un couple résistant excessif est détecté sur l'arbre d'entraînement principal de la presse, par exemple lors de la pénétration dans la chambre de la presse d'une "motte" ou d'un "paquet" de produits de récolte comme cela peut se produire lors d'un ramassage de produits de récolte très humides, ce qui provoque une brusque augmentation du volume requis de la chambre d'enroulement de la presse, le signal engendré par le détecteur de couple 20 est transmis à la valve de détente 18, pour réduire ou annuler la pression de réponse de cette valve de détente et permettre en conséquence le retour vers le fond du vérin du liquide fournissant la pression dans le ou les cylindres hydrauliques 14 lorsque le distributeur 16 se trouve fermé.

Du fait de cette réduction de pression dans le ou les cylindres hydrauliques 14, la tension des courroies 6 diminue et la presse peut ainsi absorber ce brusque apport excédentaire de produits de récolte. Quand les conditions sont redevenues normales, le couple résistant retombe au-dessous de la valeur limite prédéterminée, et le signal fourni par ce détecteur de couple cesse d'être appliqué à la valve de détente, qui se rétablit alors elle-même à sa pression de réponse définie par réglage. La pression dans les cylindres hydrauliques reprend ainsi sa valeur nominale et la tension des courroies 6 est également rétablie pour la poursuite de la formation de la balle.

Sur la Fig. 3, on a désigné par les mêmes référence que sur la Fig. 2 les éléments correspondants. Il est prévu dans ce cas, en parallèle avec la valve de détente 18 et le cylindre hydraulique 14, une valve de retour indiquée schématiquement en 21, qui peut occuper deux positions différentes. Dans l'une de ces positions, à savoir sa position normale vers laquelle elle est normalement sollicitée, elle bloque l'écoulement du liquide. Dans sa seconde position, dans laquelle elle est amenée sous l'effet d'un signal émis comme indiqué précédemment par le détecteur de couple 20 lors de la détection d'un couple résistant excessif, elle court-circuite la valve de détente 18 et le cylindre hydraulique 14 et renvoie le liquide vers le fond du vérin. De ce fait, la pression de travail du cylindre hydraulique est annulée et la tension des courroies 6 diminue. Dès que le couple résistant reprend une valeur admissible, le signal fourni par le détecteur de couple disparaît et la valve de dérivation 21 revient dans sa position normale de fermeture.

On voit ainsi que l'invention apporte une solution au problème que posent les variations brusques de couple résistant sur l'arbre d'entraînement principal des presses à balles cylindriques, par la réduction de la tension des courroies, bandes ou analogues. La réponse fournie par l'agencement faisant l'objet de l'invention est très rapide, ce qui ménage ainsi l'accouplement principal de la presse. Par ailleurs, dès que la situation

spécifique ayant provoqué cette brusque augmentation de couple résistant disparaît, les conditions de travail normales sont rétablies et la tension des courroies reprend sa valeur fixée par réglage.

### Revendications

1. Presse à balles cylindriques ou rondes comprenant des jeux de bandes, courroies (6) ou analogues ménageant une chambre de formation d'une balle par enroulement, passant sur des rouleaux de renvoi dont l'un au moins est entraîné à partir d'un arbre d'entraînement principal (19), certains de ces rouleaux de renvoi étant des rouleaux mobiles de tension soumis à l'action de moyens de sollicitation (14) pour le maintien en tension des courroies, caractérisé en ce qu'un détecteur de couple résistant (20) est prévu sur l'arbre d'entraînement principal (19) de la presse et en ce que des moyens (18, 21) reliés à ce détecteur de couple résistant (20) agissent sur ces moyens de sollicitation (14) des rouleaux de mise en tension (9) pour commander lesdits moyens de sollicitation (14) dans un sens réduisant la tension des courroies (6) lors d'un accroissement du couple résistant sur l'arbre d'entraînement de la presse au delà d'une valeur limite prédéterminée.

2. Presse à balles cylindriques suivant la revendication 1, dans laquelle les moyens de sollicitation (14) sont constitués par des cylindres hydrauliques, caractérisée en ce que le détecteur de couple (20) est relié directement ou indirectement à ces cylindres hydrauliques pour réduire la pression assurant la mise en tension des courroies (6) lorsque le couple résistant dépasse la valeur limite prédéterminée.

3. Presse à balles cylindriques suivant la revendication 2, comprenant une valve de détente (18) combinée aux cylindres hydrauliques pour limiter la pression de travail de ces cylindres, caractérisée en ce que le détecteur de couple résistant (20) prévu sur l'arbre d'entraînement principal (19) de la presse (1) est relié à cette valve de détente (18) de manière à abaisser son seuil de réponse lors de la détection d'un couple résistant sur l'arbre d'entraînement principal dépassant la valeur limite prédéterminée.

4. Presse à balles cylindriques suivant la revendicaiton 3, caractérisée en ce que le signal fourni par le détecteur de couple (20) lors de la détection d'un couple résistant dépassant la valeur limite prédéterminée annule la pression de réponse de la valve de détente (18).

5. Presse à balles cylindriques suivant la revendication 2, caractérisée en ce qu'il est prévu, en parallèle avec le ou les cylindres hydrauliques (14), une valve de dérivation (21) reliée au détecteur de couple résistant (20) et présentant deux positions, dans l'une desquelles le ou les cylindres hydrauliques est ou sont court-circuités, cette valve de dérivation étant amenée dans cette position de court-circuitage lors de la détection sur l'arbre d'entraînement principal d'un couple résistant dépassant la valeur limite prédéterminée, pour renvoyer directement vers le fond du vérin le liquide sous pression côté tige.

6. Presse à balles cylindriques suivant la revendication 5, comprenant une valve de détente (18) combinée aux cylindres hydrauliques pour limiter la pression de travail de ces cylindres, caractérisée en ce que la valve de dérivation (21) est montée en parallèle à la fois avec le ou les cylindres hydrauliques (14) et avec la valve de détente (18).

7. Presse à balles cylindriques suivant la revendication 1, comprenant des moyens de sollicitation des rouleaux de renvoi mobiles constitués par des ressorts, caractérisée en ce que les moyens reliés à ce détecteur de couple comprennent des moyens mécaniques déplaçant l'un au moins des points de fixation des ressorts pour réduire ou annuler l'effort exercé sur les rouleaux de mise en tension des courroies et réduire ainsi la tension dans ces dernières lors de la détection d'un couple résistant dépassant la valeur limite prédéterminée.

**Patentansprüche**

1. Presse für zylindrische oder runde Ballen mit einem Satz Bänder, Riemen (6) oder analogen Elementen, die eine Kammer zum Formen eines Ballens durch Aufrollen bilden und über Umlenkrollen laufen, von denen wenigsens eine von einer Hauptantriebswelle (19) aus angetrieben wird, wobei einige Umlenkrolen bewegliche Spannrollen sind, die unter der Wirkung von Vorspannmitteln (14) stehen, um die Spannung der Riemen aufrecht zu erhalten, dadurch gekennzeichnet, daß ein Fühler (20) für das Widerstandsmoment an der Hauptantriebswelle (19) der Presse vorgesehen ist und daß mit dem Fühler (20) für das Widerstandsmoment Mittel (18, 21) verbunden sind, die auf die Vorspannmittel (14) der Spannrollen (9) einwirken, um die Vorspannmittel (14) in einem die Spannung der Riemen (6) reduzierendem Sinne zu steuern, wenn an der Antriebswelle der Presse eine Zunahme des Widerstandsmomentes über einen vorbestimmten Grenzwert hinaus auftritt.

2. Presse für zylindrische Ballen nach Anspruch 1, bei dem die Vorspannmittel (14) durch hydraulische Zylinder gebildet sind, dadurch gekennzeichnet, daß der Fühler (20) für das Moment direkt oder indirekt mit den hydraulischen Zylindern verbunden ist, um den Druck zu vermindern, der für das Spannen der Riemen maßgeblich ist, wenn das Widerstandsmoment den vorbestimmten Grenzwert passiert.

3. Presse für zylindrische Ballen nach Anspruch 2, welche ein Entlastungsventil (18) in Kombination mit den hydraulischen Zylindern aufweist, um den Arbeitsdruck dieser Zylinder zu begrenzen, dadurch gekennzeichnet, daß der Fühler (20) für das Widerstandsmoment, der auf der Hauptantriebswelle (19) der Presse (1) vorgesehen ist, mit dem Entlastungsventil (18) in der Weise verbunden ist, um den Ansprechschwellwert herabzusetzen, wenn ein Widerstandsmoment an der Hauptantriebswelle festgestellt wird, der den vorbestimmten Grenswert übersteigt.

4. Presse für zylindrische Ballen nach Anspruch 3, dadurch gekennzeichnet, daß das Signal, das von dem Fühler fühler für das Moment (20) geliefert wird, wenn dieser ein Widerstandsmoment feststellt, welches den vorbestimmten Grenzwert übersteigt, den Ansprechwert des Entlastungsventils (18) annuliert.

5. Presse für zylindrische Ballen nach Anspruch 2, dadurch gekennzeichnet, daß parallel mit dem oder den hydraulischen Zylindern (14) ein Abzweigventil (21) vorgesehen ist, das mit dem Fühler (20) für das Widerstandsmoment verbunden ist und zwei Stellungen darbietet, von denen in der einen der oder die hydraulischen Zylinder kurzgeschlossen ist oder sind, wobei das Abzweigventil in diese Kurzschlußstellung gesteuert wird, wenn an der Hauptantriebswelle ein Widerstandsmoment festgestellt wird, das den vobestimmten Grenswert übersteigt, um die auf der Stangenseite befindliche, unter Druck stehende Flüssigkeit direkt zum Boden des Zylinders umzuleiten.

6. Presse für zylindrische Ballen nach Anspruch 5 mit einem Abzweigventil (19) in Kombination mit den hydraulischen Zylindern zur Begrenzung des Arbeitsdruckes dieser Zylinder, dadurch gekennzeichnet, daß das Ableitventil (21) parallel gleichzeitig mit dem oder hydraulischen Zylindern (14) und mit dem Entlastungsventil angeordnet ist.

7. Presse für zylindrische Ballen nach Anspruch 1, mit Vorspannmittel für die beweglichen Umlenkrollen, die durch Federn gebildet sind, dadurch gekennzeichnet, daß die Mittel, die mit dem Fühler des Momentes verbunden sind, mechanische Mittel umfassen, welche wenigstens den einen Befestigungspunkt der Federn verschieben, um die Kraft zu vermindern oder zu annulieren, die auf die Vorspannrollen der Riemen ausgeübt wird und so die Spannung in den Letzteren zu reduzieren, wenn ein Widerstandsmoment festgestellt wird, welches den vorbestimmten Grenzwert übersteigt.

**Claims**

1. A baler for making cylindrical or round bales comprising sets of bands, belts (6) or the like forming a chamber for the formation by winding of a bale passing over return rollers, at least one of which is driven by a main drive shaft (19), certain of these return rollers being mobile tensioning rollers subjected to the action of stressing means (14) for keeping the belts tensioned, characterized in that a resistant torque detector (20) is provided on the main baler drive shaft (19) and in that means (18, 21) connected to this resistant torque detector (20) act on these means (14) of stressing the tensioning rollers (9) to control said stressing means (14) in a manner reducing the tension of the belts (6) when there is an increase in the resistant torque on the baler drive shaft beyond a predetermined limit value.

2. A baler for making cylindrical bales according to claim 1, in which the stressing means (14) consist of hydraulic cylinders, characterized in that the torque detector (20) is connected directly or indirectly to these hydraulic cylinders to reduce the pressure ensuring the tensioning of the belts (6) when the resistant torque exceeds the predetermined limit value.

3. A baler for making cylindrical bales according to claim 2, comprising a pressure reducing valve (18) combined with the hydraulic cylinders to limit the operating pressure of these cylinders, characterized in that the resistant torque detector (20) provided on the main drive shaft (19) of the baler (1) is connected to this pressure reducing valve (18) in such a way as to lower its response threshold at the time of detection of a resistant torque on the main drive shaft which exceeds the predetermined limit value.

4. A baler for making cylindrical bales according to claim 3, characterized in that the signal supplied by the torque detector (20) at the time of detection of a resistant torque exceeding the predetermined limit value cancels the response pressure of the pressure reducing valve (18).

5. A baler for making cylindrical bales according to claim 2, characterized in that there is provided, in parallel with the hydraulic cylinder or cylinders (14), a by-pass valve (21) connected to the resistant torque detector (20) and having two positions, in one of which the hydraulic cylinder or cylinders is or are short-circuited, this by-pass valve being brought into this short-circuiting position at the time of detection on the main drive shaft of a resistant torque exceeding the predetermined limit value, to bring directly back to the bottom of the jack the liquid under pressure on the stem side.

6. A baler for making cylindrical bales according to claim 5, comprising a pressure reducing valve (18) combined with the hydraulic cylinders to limit the operating pressure of these cylinders, characterized in that the by-pass valve (21) is mounted in parallel both with the hydraulic cylinder or cylinders (14) and with the pressure reducing valve (18).

7. A baler for making cylindrical bales according to claim 1, comprising means of stressing the mobile return rollers consisting of springs, characterized in that the means connected with this torque detector comprise mechanical means displacing one at least of the locating points of the springs to reduce or cancel the force exerted on the belt tensioning rollers and thereby to reduce the tension in the latter at the time of detection of a resilient torque exceeding the predetermined limit value.

FIG. 1

FIG. 2

FIG. 3